# EUROPEAN PATENT SPECIFICATION

(11) **EP 1 523 284 B1**
(45) Date of publication and mention of the grant of the patent: **09.03.2011**
(21) Application number: 03760081.4
(22) Date of filing: 13.06.2003
(51) Int. Cl.: A61C 8/00

(54) **Dental prosthesis**
Dentalprothese
Prothèse dentale

(30) Priority: 15.06.2002 GB 0213774
(43) Date of publication of application: 20.04.2005
(73) Proprietor: Neoss Limited, Harrogate HG1 2PW (GB)
(72) Inventor: ENGMAN, Fredrik, S-435 37 Molnlycke (SE)
(74) Representative: Harrison Goddard Foote
(86) International application number: PCT/GB2003/002578
(87) International publication number: WO 2003/105710

(56) References cited:
- FR-A- 2 669 210
- FR-A- 2 800 988
- US-A- 5 417 568
- US-A1- 2001 021 498

## Description

The present invention is directed to a novel dental prosthesis and to a novel method of use related thereto.

In particular the present invention relates to a novel dental arrangement, including a novel prosthesis and an implant kit which provides improved treatment.

A dental arrangement will generally comprise an implant which is anchored in the jawbone and protrudes from the gingival region. An abutment is then anchored in the implant and forms the site for reconstruction of the tooth. The tooth reconstruction will often comprise fitting, e.g. cementing, glueing, casting or welding a metal cast onto the abutment and fusing porcelain onto the metal cast.

In a device for the reconstruction of missing or lost teeth, an implant, which ends in the gingival region, is biologically anchored in a jawbone. The implant acts as the anchoring site for an abutment, which in turn forms the reception site for the tooth being reconstructed. The external surface of the abutment is adapted to engage a coping. The coping is made, for example, in an acrylic, which can be supplied in a kit with copings of several suitable anatomical shapes, including, for example, different transgingival margins and cross-sections, heights, diameters and angulations. These copings can form the base for reconstruction of the tooth by, for example, the lost wax-technique. The coping and the abutment can be individually prepared to represent the retention shape of the tooth being reconstructed. The method using a precious alloy abutment is an evolution of the so-called UCLA abutment. The method is also suitable for other metal abutments, preferably in titanium or CoCr, where the casting from the prepared coping is joined to the metal abutment by, for example, laser welding.

The restoration of a tooth on a dental implant can be made using several well known techniques. First there is a choice between so called cemented solutions (porcelain and ceramic cemented on the retention shape of the tooth being reconstructed) or screw retained solutions (porcelain and ceramic on a precious metal coping or bridge screwed onto the abutment). Cemented solutions are mainly based on individually prepared abutments while screw retained solutions generally are based on ready machined components. Secondly if it is a single tooth case compared to a multiple unit case like a partial or bridge, then non-rotational or rotational abutments in relation to the implant need to be considered.

For a cemented solution one of the treatment steps is to manufacture a retention shape of the tooth being reconstructed on the implant. There are several methods and products suitable for performing this part of the treatment. In a case where an especially aesthetic soft tissue margin is desired there are non-precious, e.g. titanium, prepable abutments which can be divided in three groups for single and multiple tooth restorations:
Type I - blanks (i.e. TiAdapt™ - Nobel Biocare) or blanks with a plastic sleeve for wax-up (i.e. Preci Disc - CEKA)
Type II - anatomical (i.e. Straight and Angled Esthetic™ - Nobel Biocare, FRIALIT®-2 EstheticBase - Friadent, Bio Anatomic Line® - Oraltronics) with prepared margins
Type III - Individually machined non-precious abutments (i.e. Procera® Abutment - Nobel Biocare and other CAD/CAM related techniques from, for example, KaVo- or 3M ESPE - Lava) which also includes producing custom made partials or bridges. semi-atomised methods like the Cresco method.

Another common technique to achieve highly aesthetic soft tissue margins involves cast-on precious metal abutments for single and multiple tooth restorations:
Type IV - Plastic sleeves for wax-up support, i.e. the UCLA-type (UCLA - 3i, Auradapt - Nobel Biocare, FRIALIT®-2 AuroBase - Friadent) where the plastic part is pre-mounted on the metallic abutment for each different abutment diameter.
Type V - A similar type as IV is the "Cast-To" Gold Abutments (Sulzer Dental) where the components feature a gold base and a plastic sheath, which is incorporated into the abutment pattern and cast onto the base, and with the option to purchase different plastic sheaths with different emergence profiles.
Type VI - and others for direct wax-up (i.e. Multi Unit abutment, Nobel Biocare).

A common feature with these, Type I-V, is that the connection surfaces with the implant and the abutment screw is machined and therefore exhibits high tolerances and smooth surfaces and includes an extensive assortment. There also exists prepable blanks wholly made in burn-out plastics:
Type VII -a plastic coping, for example with internal octagon (ITI), or prepable anatomical abutments like the Castable Abutment System, i.e. C.A.S. Esthetic (Oraltronics). The common feature with these is that the connection surfaces with the implant and the screw will be formed during casting.

In order to provide a solution for different anatomical situations a dental implant system normally comprises of several implant diameters with a corresponding abutment size, i.e. fully castable abutments like the C.A.S. Esthetic (Oraltronics) or for the UCLA-technique represented by the AurAdapt or GCTF of the Branemark System (Nobel Biocare). The general assortment of non-precious metal abutments generally consists of different diameters and in addition also different heights and angulations.

A conventionally known dental arrangement, comprises an implant, abutment and a coping screwed into the abutment.

However, such arrangements suffer from a number of disadvantages. The *in situ* preparation of titanium abutments (Type I-II above) and copings is time consuming and still requires different diameters, angulations or heights of the copings with a subsequent large assortments of the expensive metal part and high costs for the dental technician work. Specifically the margin on the copings may be difficult to create.

Individually machined abutments like the Procera Abutments (Type III above), are only available from a specific supplier, in this case Nobel Biocare, which normally requires, *inter alia,* complicated logistics. The original aim with introducing the Type III prosthetic solutions was to use a cheaper and more bio-compatible material then the more conventionally used precious alloys represented by Types IV-VII, and to achieve an absolute passive fit between the prosthetics and the implant by using a machined material and not a cast material, with subsequent problems like porosities and distortion after casting. However, during the last 5-7 years the casting technique for titanium and other related techniques, like laser and X-ray, has considerably improved the casting results, leading to tolerances and a passive fit to the implants equal to conventional precious metal solutions, for example, Type IV-VI and the CAD/CAM solutions, Type III.

The other solutions, Type I-II and Type IV-Type VII, generally requires the clinician or dental technician to hold relative large and expensive stocks of such abutments, especially since there is no simple solution that can be applied to all clinical situations with a choice of non-precious or precious material.

Furthermore, precious metal abutments (type IV-V above) require several manufacturing steps for the dental technician, i.e. transgingival margins and emerging profiles to waxed-up, trimming or milling to obtain optimum angulations. Conventionally known plastic copings offer little or no support in this. However, type V above facilitates a somewhat easier preparation since a few options of emergence profiles are available, but since these have to be purchased separately the overall gain is little.

In order to achieve the right fit, the part, i.e. the abutment, that connects to the implant must be machined, *inter alia,* to avoid voids between the parts and a subsequent microleakage. Thus, the type VII abutment is unsuitable for use with the existing casting techniques.

Another reason for having a machined abutment, and not a cast abutment, connecting to the implant, is that the abutment screw may require a specific preload to withstand the forces on the prosthetic construction in function. This can only be achieved if the seating surface of the screw on the abutment and the connecting area between the implant and the abutment, are both machined.

A poor fit between the abutment screw and the connecting area lead to rotational movements and can also cause screw loosening. Indeed, some of the most advanced abutment connections prove to be impossible to cast.

In summary, the problem with prior art arrangements is that, *inter alia,* they are generally not adapted to be worked up by a dental technician in a local laboratory with common laboratory equipment or, alternatively, the dental technician will have an extremely wide range of prostheses to have to choose from.

US5,417,568 (Giglio) discloses a contoured abutment in which there is provided a contoured abutment fabricated from a gold alloy, titanium or ceramic material to which is attached in a conventional manner a cylinder normally fabricated of a gold alloy. Mounted on the cylinder is a conventional porcelain restoration connected thereto by a screw.

US5,873,721 (Willoughby) discloses a custom made metal abutment milled from a titanium blank.

We have now developed a novel dental prosthesis arrangement which overcomes or mitigates the disadvantages of prior art approaches. In particular we have developed a novel dental prosthetic abutment and a novel coping, which enables an improved dental prosthesis to be prepared. The invention is defined in the appended claims.

We provide a prosthetic dental plastics coping as defined in claim 1.

Of course, it is within the scope of the present invention for the coping to be resemblant of a tooth prosthesis or prepared tooth.

It is an important aspect of the present invention that the coping is adapted to be rotatable. The provision of a rotatably mounted coping is advantageous in that, *inter alia,* it provides the technician with 360 degrees of freedom. Existing copings are provided in premounted form, which means that they are generally cylindrical and therefore lack important anatomical features, which presents difficulties to the technician in working up the coping.

In a further preferred embodiment the coping may be adapted to form a snap fit with the abutment. The term snap fit will be well understood by those skilled in the art. Thus the term should be construed as meaning any conventional, e.g. non-screw fitting, whereby the abutment and the coping can form a snug, engaging fit with one another. Other such similar terms which should be included in the term snap fit are, e.g. snug fit, push fit, etc. Another method is to fit the coping to an abutment by means of the pre-load, e.g. from a screw.

The anatomically resemblant copings of the invention are advantageous in that, *inter alia,* they enable the dental technician to be provided with a limited selection of copings. Thus, preferably the novel copings of the invention may anatomically resemble a molar, a premolar a canine or an incisor, resulting in the achievement that only a limited assortment of abutments is required, e.g. preferably four for each size per implant connection geometry.

Thus, in a further aspect of the invention we provide a kit of parts comprising at least an abutment, e.g. a dental abutment, and a selection of copings as hereinbefore described.

Preferably, the kit of parts comprises a plurality of copings and, optionally, a plurality of abutments. In a further preferred embodiment the kit of parts as hereinbefore described may also comprise one or more dental implants.

The coping, the abutment and/or the arrangement as hereinbefore described are each novel *per se*.

Thus, according to a further aspect of the invention we provide a dental abutment which is adapted to form a rotatable fit with a coping as hereinbefore described.

In an embodiment of the invention the abutment may be provided with means for forming a stable retaining joint with the coping. Preferably, the coping may also comprise corresponding means for forming a stable retaining joint with the abutment.

Conventionally known retaining means may be used. However, in one embodiment, the stable retaining means may comprise an annular recess and an annular lip adapted to engage with one another. Thus, the stable retaining means may comprise an abutment provided with an annular lip and a coping provided with an annular recess. In an alternative and preferred embodiment the stable retaining means may comprise an annular lip/press fit engagement, or "snap-on" arrangement.

However, in the most preferred embodiment the abutment will be provided with an annular recess and the coping may be provided with an annular lip.

For the reseating of a cast on an abutment the aforementioned retentive feature should not interfere with the abutment so that is why it must be able to be removed and/or deactivated, which, prior to the present invention, has substantially always been the case for non-precious alloys intended to be joined to the abutment by other means than being directly cast on to the abutment. The annular lip on the coping, hereinbefore described, can therefore be removed prior to or after casting, whichever is considered to be the most convenient.

The reseating of the cast can be facilitated by involving removable "scotch" tape or paint which during casting forms a base for the retentive feature of the snap-on function but if placed on the abutment easily can be removed prior to reseating.

In a device for the reconstruction of missing or lost teeth, an implant, which ends in the gingival region, is biologically anchored in a jawbone. The implant acting as the anchoring site for an abutment, which in turn forms the reception site for the tooth being reconstructed. The external surface of the abutment is adapted to the internal geometry of a coping and there are means to obtaining a stable join between the abutment and the coping during the preparation of the restoration. The coping is made in an acrylic or other suitable "burn-out" material, which can, optionally, be supplied in a kit with copings of several suitable anatomical shapes, including, for example, different transgingival margins and cross-sections, heights, diameters and angulations, which form the base for reconstruction of the tooth by, for example, the lost wax-technique. The coping and the abutment can be individually prepared to represent the retention shape of the tooth being reconstructed. The method using a precious alloy abutment is an evolution of the so-called UCLA abutment. The method is also suitable for other metal abutments, preferably in titanium or CoCr (cobalt chrome), where the casting from the prepared coping is joined to the metal abutment by for example laser welding.

In addition, to fasten the cast by laser welding or casting gold onto gold, we have found it possible to glue a titanium cast on to a titanium base or a gold cast on to a titanium base. Although a variety of glues may be used, one example of an appropriate glue is a medical grade epoxy resin. The procedure is such that the cast can be glued on to e.g. a metal base in the laboratory prior to or after porcelain bonding, under conditions that are very suitable but also convenient and familiar for the laboratory technician. Alternatively, a plastics base may; be used.

The coping may be prepared from a variety of materials such as a so-called "burn out" plastic or wax material, which are familiar to dental technicians in creating cast metal restorations using the lost-wax technique. A suitable plastic material is LEXAN 141R (in a clear 111 grade) available from General Electric. This material can be ground or otherwise machined to a desired customised shape.

According to a further aspect of the invention we provide a method of preparing a dental prosthesis which comprises the use of a kit or an arrangement as hereinbefore described.

The arrangement and the novel copings and/or the kit of the invention are advantageous in that, *inter alia,* they:
Allow easy, fast and flexible preparation by the technician or the clinician by providing customised optimal near finish line or transgingival margin, transgingival cross-sections, angulation and emergence profile as well as avoiding or minimising any trimming of metal since the major part of the trimming can be made in the plastic.
Bring implantology closer to conventional dentistry by providing a much easier and faster way to prepare the retention shape of a tooth being reconstructed.
Provide a predictable interface between the abutment and the implant and the abutment screw providing stable preload and tight fit between the implant and the abutment.
Require no or little needs for different abutment heights or angulations reflecting in a low overall system stock level for the individual clinician, technician, clinic, hospital and even the manufacturer.

One advantage of the invention is that is possible to make a gold restoration on a non-precious metal base, which has advantages when no titanium casting machine is available. For example, the technician does not store a range of porcelains suitable for titanium. The base is also less expensive but the restoration uses the most common material which is gold. It is also possible to make a full titanium restoration, for example, without having the need for a laser welding equipment. The gluing can take place preferably in the laboratory, which means that a much more controlled and advanced procedure can be carried out compared to gluing conducted in the oral cavity. The same components can be used for all described fastening methods providing a large flexibility of restoration options.

A further option which is within the scope of the present invention is to have a plastic abutment base in addition to a titanium, gold or ceramic restoration. Such an option is advantageous because, *inter alia,* the restoration will be extremely inexpensive to use, although in some instances it may be less exact since there is not a machine fit. This would provide a plastic coping on a plastic base and allow casting of the whole preparation in one piece in precious or non-precious material. Thus, no welding of the parts would be necessary, e.g. of titanium.
Thus according to a yet further embodiment of the invention we further provide a method of preparing a dental prosthesis which comprises producing a single cast comprising a dental abutment and a prosthesis which is anatomically resemblant to a tooth.

We further provide a kit of parts comprising at least a selection of copings one or more plastics dental abutments.

The invention also provides the advantage of a method which is also suitable for other metal abutments, preferably in titanium, where the casting from the prepared coping is joined to the metal abutment by for example laser welding. Since titanium is a biocompatible material compared to gold this is a preferable solution as well as for patients allergic to gold. CoCr is also a metal that can be used according to the principles of titanium.

The plastic coping and the abutment can also be used together with CAD/CAM techniques and relative methods, where it provides faster preparation. Furthermore, it is within the scope of the present invention for the copings of the invention to be used in a method comprising scanning or other type of shape transfer on to a CAD/CAM system. The coping may then be further processed to create a dental restoration. The shape transfer in this aspect of the present invention is not dependent upon, *inter alia,* the base material used, e.g. titanium, gold, ceramic, ceramic composites, plastic resin, Co/Cr etc. In addition, the shape transfer is further not dependant upon whether or not the coping is mounted on an abutment or any metal or plastic base or alternatively whether it is made to fit directly onto an implant.

The method can provide a business solution where the technique is provided to several manufacturers by adjusting the abutment interface to the specific implant system and is especially effective on implant level since it will exclude the expensive abutment, but still the solution can be adapted to abutment level.

In a further embodiment of the invention we provide a method of preparing a dental prosthesis which comprises the use of a glue to join a cast made of a precious or non-precious metal to a base.

In this embodiment of the invention the method may comprise gluing to a metal base, e.g. an metal portion of an abutment connection, or, alternatively, a plastics base.

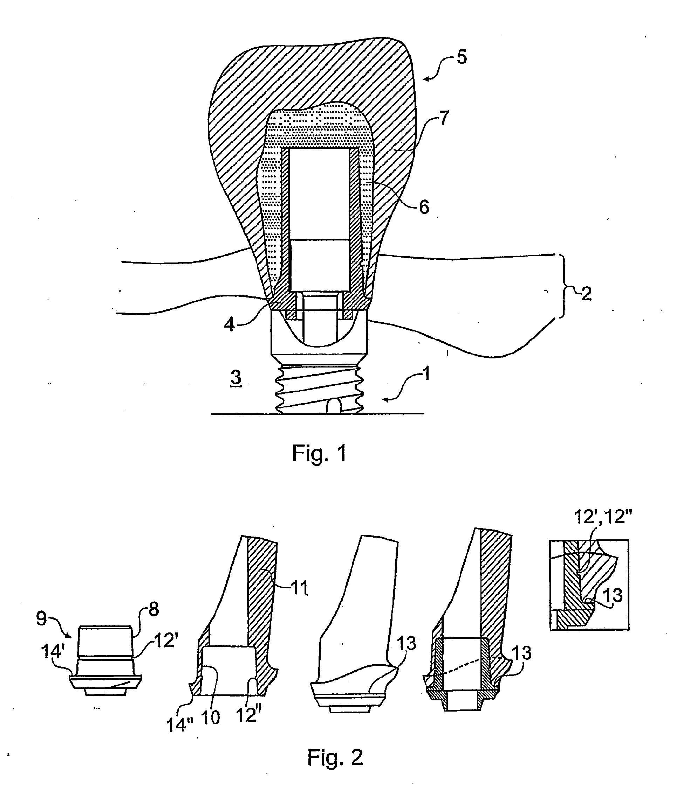

The invention will now be described by way of example only and with reference to the accompanying drawings, in which Figure 1 illustrates an implant with abutment and the restored crown in bone;
Figure 2 illustrates an abutment and plastic coping designs with retentive feature;
Figures 3-4 illustrate plastic coping designs including different transgingival height, angulation emergence profile;
Figure 5 illustrates the transgingival cross-sections of plastic coping
Figures 6-7 illustrate restorative procedures with precious metal abutment;
Figures 8-9 illustrate restorative procedures with non-precious metal abutment including joining;
Figure 10 is a cross sectional view of plastics coping;
Figure 11 is a plan view of a plastics coping;
Figure 12 is a perspective representation of a titanium abutment connection; and
Figure 13 is a perspective representation of a gold abutment connection.

Referring to Figure 1; for the reconstruction of missing or lost teeth, an implant (1), which ends in the gingival region (2), is biologically anchored in a jawbone (3). The implant acting as the anchoring site for an abutment (4), which in turn forms the reception site for the tooth being reconstructed (5) with a metallic cast (6) on the abutment (4) and porcelain (7) fused on the cast (6). After placement of the implant an impression is taken for replicating the position of the implant prior to the restorative work. Impression on fixture level is an increasingly used method for reasons like accuracy, price, earlier loading, one-stage surgery. A so called master cast or stone model is made with a fixture replica providing a base for the continuing restoration. The restorative solution according to the invention is a cemented solution for both single tooth solutions and multiple unit restorations, even though excess holes in an appropriate position can permit screw retained retrievability.

Referring to Figure 2; the external surface (8) of the abutment (9) is adapted to the internal geometry (10) of a plastic coping (11) according to the invention and fig 2. There are means (12', 12") to obtain a stable and retaining joint (13) with high tolerances and fit between the abutment and the coping mating surfaces (14',14") during the preparation of the restoration. This retention can for example be obtained by means of friction, mechanical locking, temporary cement, removable scotch, removable paint or combination thereof.

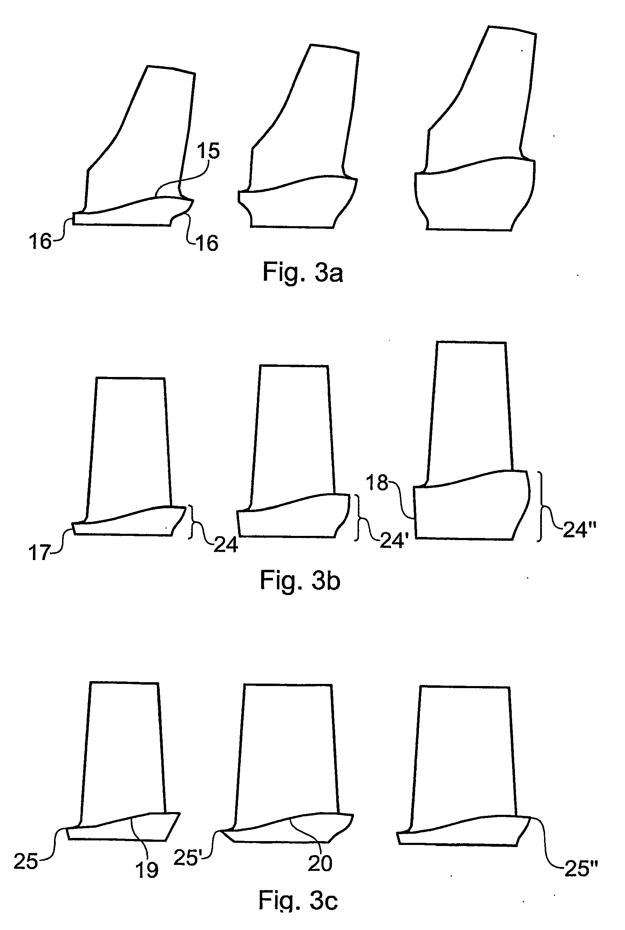

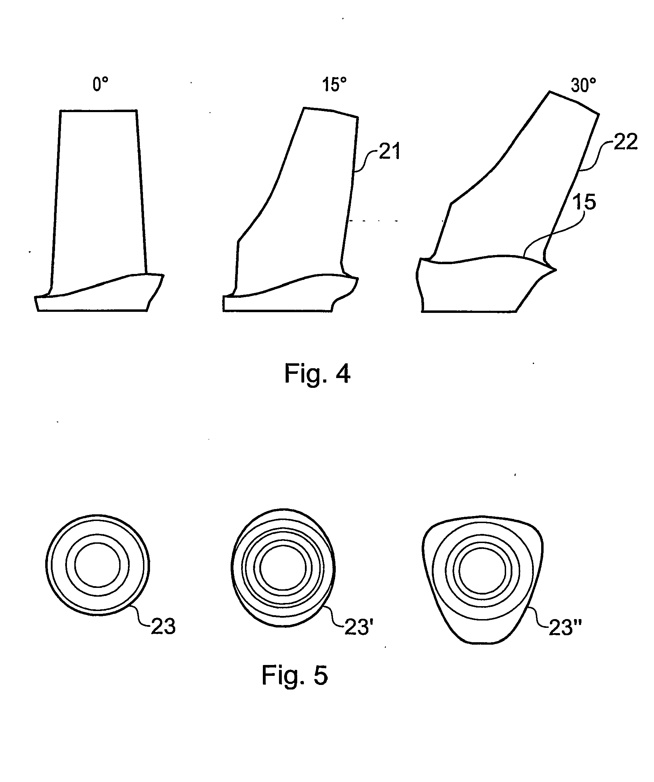

Referring to Figures 3 and 4; a set of burn-out plastic copings, with anatomical transgingival margins 15 that follow the mesial (16') and distal contour (16"). A set includes different anatomical copings for different anatomical positions like the anterior mandible (narrow teeth), the anterior maxilla (angulated teeth) or the posterior regions (larger emergence profiles and diameters). The anatomical designs include copings with low margins (17) to high margins (18), fig 3b, narrow margins (19) or wide margins (20), fig. 3c, and angulated copings with angulations up to 40° degrees, but preferably 15° (21) to 30° (22), fig 4. Other anatomical design features are different transgingival cross-sections fig. 5 with round (23), oval (23') and triangular (23"), different heights (24, 24', 24"), fig. 3b, and emergence profiles (25, 25', 25"), fig 3c. The heights are preferably from 1-5 mm. Each set can be produced from the same mould and even held together by the spurs in its as delivered condition. Together with the anatomical copings proper blanks and/or instruments can be included in the kit and on spur. With each abutment, which for example is made in a precious metal or non-precious like titanium, the clinician can be provided with the whole range of copings to choose from due to the effective production. Thus the set can be included with each abutment, but the copings can also be provided separately from the abutments, for example sorted by type but still they form a set of copings available for the clinician. The number of copings is below 30 and preferably below 20.

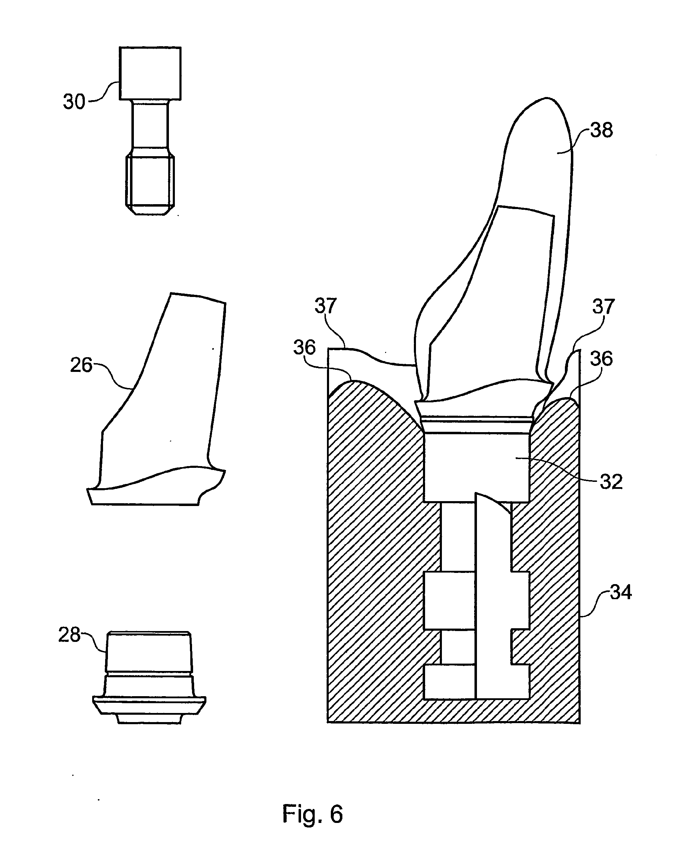

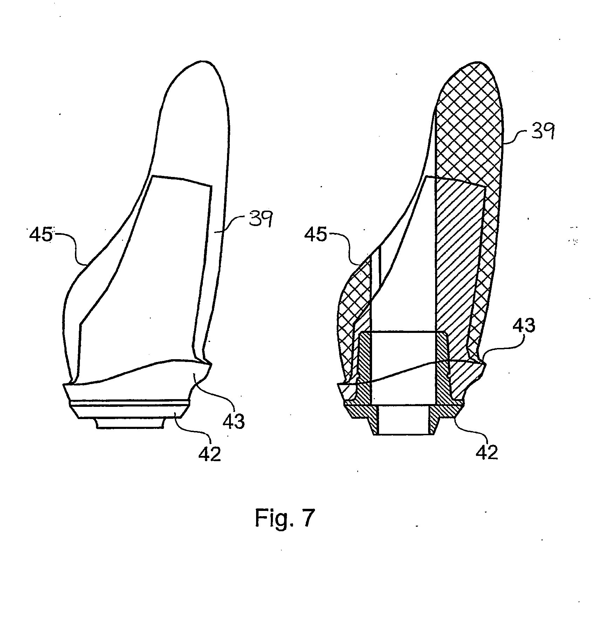

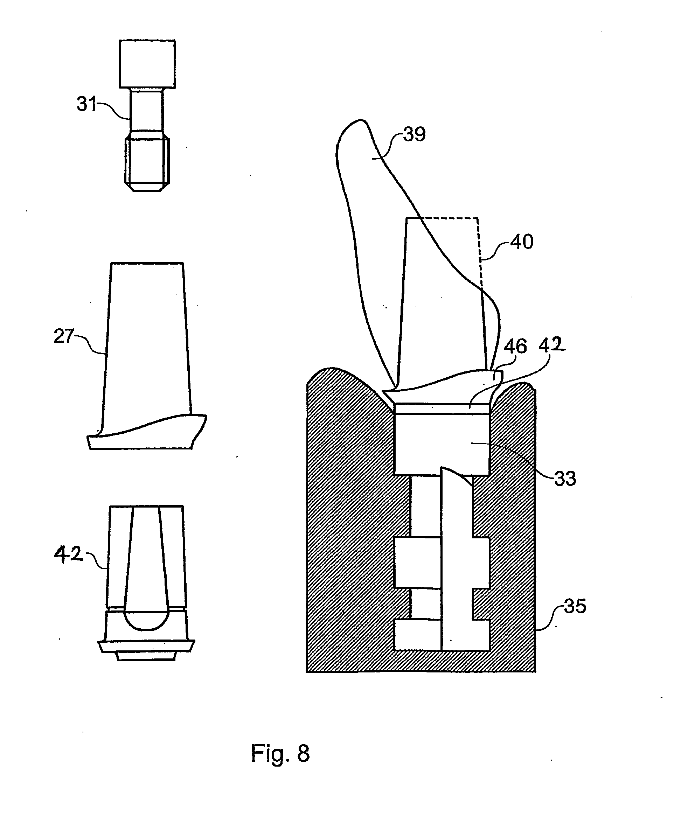

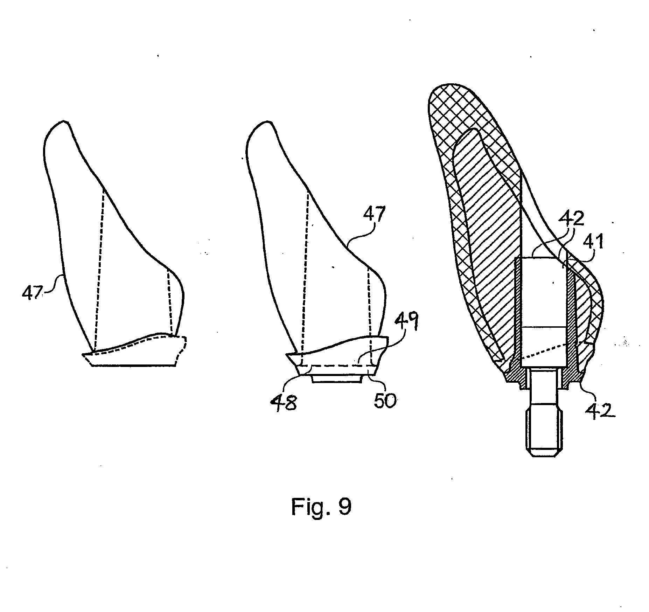

Referring to Figures 6 to 9; the coping (26, 27) is in most cases fitted by the dental technician on to an abutment (28, 42) by the means of an abutment screw (30, 31), fig 6, 8, on a fixture replica (32, 33) of the master cast (34, 35). Once in the appropriate surrounding with bone tissue levels (36) and/or soft tissue levels (37) the preparation starts with forming the reconstruction, preferably with wax (38, 39) and the subsequent lost wax-technique. If necessary the coping can be individually milled and trimmed (40), which requires that the coping is rotationally stable on the abutment as well as being able to with stand the bending forces. Also the abutment can be adjusted and trimmed (41), fig. 9, during this work, which normally is the case when an angulated abutment is needed.

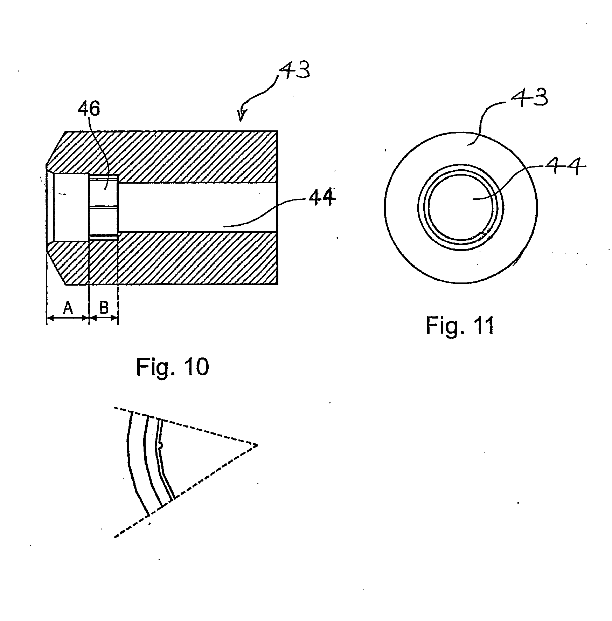

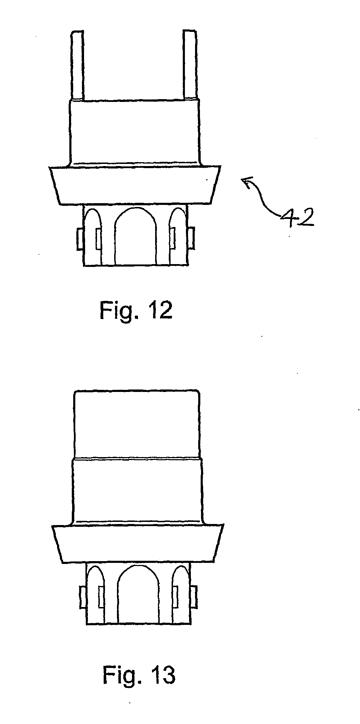

Referring to Figures 10 and 13, the inner region of a plastic coping (43) is provided with a central conduit (44). One end of the conduit (44), is provided with an annular shoulder (depicted as region A), the shoulder itself being provided with a plurality of circumferential ridges/lips (46), preferably 6, (depicted as region B). The ridges/lips (46) comprise a resilient plastics material which can resiliently flex so as to creates a compression through press fit over the corresponding top part of an abutment. It is not necessary for region A to be provided with a press fit since it is mainly there to provide support rather than to form a fixing connection.

Furthermore, it is important that the titanium abutment (42) (depicted in Figure 12) may have two regions (wings) of the upper part of the abutment. In addition, some of the annular ridges/lips of the coping may also be removed in order to avoid fitting problems after casting.

Abutment bases (50) according to the invention may be made of a variety of rigid dental materials, preferably metals such as dental gold, as can the substructure of the restoration. Depending on if it is a precious metal, fig 6-7, or non-precious, fig.8-9, abutment the procedures of the casting and forming of the metal base for the porcelain are to some extent different.

### Example 1

### Casting with precious metal abutment

After the preparation, the coping (43), the wax (39) and the abutment (42) are cast by conventional methods, for example the lost wax process as previously said, to form a solid body (45). The preparation has no limitations and the copings can be used when producing single crowns, partials or full bridges as well as for ball attachments according to any existing common procedures. This technique can be used also with non-precious metals but the bonding between the metal abutment and that cast will be poor with the existing casting techniques and metals. However there is another solution for non-precious materials, like titanium, as described below.

### Example 2

### Casting with non-precious metal abutment

When using a non-precious metal like titanium in the abutment (42) the preparation (39,46,) is lifted off from the abutment (42) and then the preparation is cast individually according to suitable techniques. To be able to re-seat the cast (47) on the abutment (42) the retention function of the retentive element (12") must be removed which is done either before casting on the preparation (47) or after casting with a suitable method and/or tool. If it is an annular lip on the coping or on the cast the lip can be removed by a burr or similar tool. If it is a scotch then it is just peeled off. If it is a paint, the paint is removed by existing methods. When this is done the solid non-precious preparation (47) can be placed and joined to the abutment (42) by means of for example laser welding the contacting surfaces (48, 48'). To increase the strength, or as alternative joining methods, cementation can be used or an extra weld can be placed on the upper coronal part of the abutment (42). The laser weld (49) is easily polished to avoid irregularities in order to avoid plaque retention. After the preparation of the metallic core (47+42) of the reconstructed tooth (5) the baking of the porcelain (I) can take place on the individually made or customised abutment containing the metal cast (II) joined to the abutment (III). Again the preparation has no limitations and the copings can be used when producing single crowns, partials or full bridges as well as for ball attachments, even though for some rare cases the titanium cast is still not suitable since passive fit of for example a cast bridge might only be achieved by sectioning the final cast and subsequent joining by laser or other appropriate method. The preferred solution with the method of casting in a non-precious metal like titanium is to fabricate an individual abutment which than can be a base for single crowns, partials or full bridges as well as for ball attachments.

### Example 3

### Gluing a precious or non-precious abutment on to a non-precious metal abutment

When using glue, for example epoxy, there is another method to prepare the customised abutment where by the solid precious or non-precious preparation (47) is glued on to the non-precious base. This can be done prior to or after the porcelain firing depending on the glue. The glue is for example applied on the external surface (8) and the mating surface (14') of the abutment before mating the preparation (47) with the metal base (50). After the mating the assembly is cured in for example a furnace in inert or normal environment.

## Claims

1. A prosthetic dental plastics coping (11) adapted for use with a prosthetic dental abutment (9) wherein the coping (11) is not premounted to an abutment but is selectable from a selection of copings and attachable to an abutment and wherein the coping is anatomically resemblant to a tooth and wherein the coping is adapted to be rotatably mounted to an abutment with 360 degrees of freedom.

2. A prosthetic dental plastics coping according to claim 1 **characterised in that** the coping (11) is resemblant of a tooth prosthesis, or of a preprepared tooth.

3. A prosthetic dental plastics coping according to claim 1 **characterised in that** the coping is resemblant to a molar, or a premolar, or a canine, or an incisor.

4. A prosthetic dental plastics coping according to claim 1 **characterised in that** the coping comprises a "burn out" plastic or wax material.

5. A prosthetic dental plastics coping according to claim 4 **characterised in that** the burn-out plastic or wax material is LEXAN 141R.

6. A dental abutment (9) which is adapted to form non premounted engagement with a prosthetic dental plastics coping (11) according to claim 1.

7. A dental abutment according to claim 6 **characterised in that** the abutment (9) is provided with means (12') for forming a stable retaining joint (13) with the coping (11) during the preparation of a tooth restoration.

8. A dental abutment according to claim 7 **characterised in that** the coping (11) also comprises corresponding means (12") for forming a stable retaining joint (13) with the abutment (9).

9. A dental abutment according to claim 7 **characterised in that** the stable retaining joint comprises an annular recess and an annular lip adapted to engage with one another.

10. A dental abutment according to claim 9 **characterised in that** said abutment is provided with said annular lip and a coping is provided with said annular recess.

11. A dental abutment according to claim 9 **characterised in that** said abutment is provided with said annular recess and the coping is provided with said annular lip.

12. A coping according to claim 1 **characterised in that** it comprises as transgingival margin (15).

13. A coping according to claim 1 **characterised in that** the abutment is provided with anatomical heights, emergence profiles and angulations (23-25).

14. A dental abutment according to claim 6 **characterised in that** the abutment material is a metal, preferably Au or Ti or CoCr alloy.

15. A dental abutment according to claim 6 **characterised in that** the abutment material is a plastics material.

16. A dental abutment according to claim 14 **characterised in that** the connection with the coping is in the form of one or more of a screw thread, snap-on, or friction.

17. A dental arrangement comprising a dental abutment and a coping according to claim 1.

18. A kit of parts comprising at least a selection of copings according to claim 1.

19. A kit according to claim 18 **characterised in that** the kit also comprises one or more dental abutments and/or one or more dental implants.

20. A kit according to claim 18 **characterised in that** the kit comprises a plurality of copings and a plurality of abutments.

21. A kit according to claim 18 **characterised in that** the kit comprises a plurality of anatomical copings (proper blanks) and/or instruments included on spur.

22. A kit according to claim 18 **characterised in that** the kit comprises a plurality of copings for each size per implant connection geometry.

23. A method of preparing a dental prosthesis which comprises the use of a kit according to claim 18.

24. A method according to claim 23 **characterised in that** the coping and the abutment can be individually prepared to represent the retention shape of the tooth being reconstructed.

25. A method according to claim 23 **characterised in that** the method comprises casting from a prepared coping and joining to the metal abutment by, for example laser welding or gluing.

26. A method according to claim 23 **characterised in that** the method comprises the use of a glue to join a cast to a metal base, the cast being made of, for example, a precious or non-precious metal.

27. A method according to claim 23 **characterised in that** the coping is made in an acrylic or other burn-out materials, which can be supplied in a kit with copings of several suitable anatomical shapes.

28. A method according to claim 23 **characterised in that** the coping comprises a "burn out" plastic or wax material and the prosthetics as prepared using the lost-wax technique including an abutment being cast into the cast.

29. A method according to claim 23 **characterised in that** the coping and/or abutment comprises a stable retaining joint comprising an annular recess and an annular lip adapted to engage with one another and wherein the annular lip may be removed or substantially removed using a burr or similar tool or by friction blasting.

30. A method according to claim 23 **characterised in that** the coping and/or abutment comprises a stable retaining joint comprising an adhesive (scotch) tape that may be removed by peeling off, or a paint that may be removed using existing methods known *per se.*

31. A method according to claim 23 including the step of producing a single cast comprising a dental abutment and a prosthesis which is anatomically resemblant to a tooth.

32. A method according to claim 23 which comprises the use of a glue to join a cast made of a precious or non-precious metal to a base.

33. A method according to claim 32 wherein the base is a metal base or a plastics base, or a ceramic or ceramic composite base.

## Patentansprüche

1. Prothetische Kunststoff-Zahnstumpfkappe (11), die zur Verwendung mit einem prothetischen dentalen Pfeiler (9) angepasst ist, wobei die Stumpfkappe (11) nicht an einem Pfeiler vormontiert ist, sondern aus einer Auswahl von Stumpfkappen auswählbar ist und an einem Pfeiler befestigt werden kann, und wobei die Stumpfkappe anatomisch ähnlich zu einem Zahn ist und wobei die Stumpfkappe angepasst ist, um an einem Pfeiler drehbar mit 360° Freiheit montiert zu werden.

2. Prothetische Kunststoff-Zahnstumpfkappe nach Anspruch 1, **dadurch gekennzeichnet, dass** die Stumpfkappe (11) einer Zahnprothese oder einem zuvor vorbereiteten Zahn ähnlich ist.

3. Prothetische Kunststoff-Zahnstumpfkappe nach Anspruch 1, **dadurch gekennzeichnet, dass** die Stumpfkappe einem Mahlzahn oder einem Vormahlzahn oder einem Eckzahn oder einem Schneidezahn ähnlich ist.

4. Prothetische Kunststoff-Zahnstumpfkappe nach Anspruch 1, **dadurch gekennzeichnet, dass** die Stumpfkappe ein "Ausbrenn"-Kunststoff- oder -Wachsmaterial aufweist.

5. Prothetische Kunststoff-Zahnstumpfkappe nach Anspruch 4, **dadurch gekennzeichnet, dass** das Ausbrenn-Kunststoff- oder -Wachsmaterial LEXAN 141R ist.

6. Dentaler Pfeiler (9), der angepasst ist, um einen nicht vormontierten Eingriff mit einer prothetischen Kunststoff-Zahnstumpfkappe (11) nach Anspruch 1 zu bilden.

7. Dentaler Pfeiler nach Anspruch 6, **dadurch gekennzeichnet, dass** der Pfeiler (9) mit einer Einrichtung (12') zum Bilden einer stabilen Befestigungsverbindung (13) mit der Stumpfkappe (11) während der Erstellung einer Zahnfüllung versehen ist.

8. Dentaler Pfeiler nach Anspruch 7, **dadurch gekennzeichnet, dass** die Stumpfkappe (11) auch eine entsprechende Einrichtung (12") zum Bilden einer stabilen Befestigungsverbindung (13) mit dem Pfeiler (9) aufweist.

9. Dentaler Pfeiler nach Anspruch 7, **dadurch gekennzeichnet, dass** die stabile Befestigungsverbindung eine ringförmige Vertiefung und eine ringförmige Lippe aufweist, die angepasst sind, um miteinander in Eingriff zu stehen.

10. Dentaler Pfeiler nach Anspruch 9, **dadurch gekennzeichnet, dass** der Pfeiler mit der ringförmigen Lippe ausgestattet ist und eine Stumpfkappe mit der ringförmigen Vertiefung ausgestattet ist.

11. Dentaler Pfeiler nach Anspruch 9, **dadurch gekennzeichnet, dass** der Pfeiler mit der ringförmigen Vertiefung ausgestattet ist und die Stumpfkappe mit der ringförmigen Lippe ausgestattet ist.

12. Stumpfkappe nach Anspruch 1, **dadurch gekennzeichnet, dass** sie einen transgingivalen Rand (15) aufweist.

13. Stumpfkappe nach Anspruch 1, **dadurch gekennzeichnet, dass** der Pfeiler mit anatomischen Höhen, hervortretenden Profilen und Angulationen (23-25) ausgestattet ist.

14. Dentaler Pfeiler nach Anspruch 6, **dadurch gekennzeichnet, dass** das Pfeilermaterial ein Metal ist, bevorzugt Au oder Ti oder CoCr-Legierung.

15. Dentaler Pfeiler nach Anspruch 6, **dadurch gekennzeichnet, dass** das Pfeilermaterial ein Kunststoffmaterial ist.

16. Dentaler Pfeiler nach Anspruch 14, **dadurch gekennzeichnet, dass** die Verbindung mit der Stumpfkappe in der Form von einem oder mehreren von einem Schraubgewinde, Aufschnappen oder Reibung vorgesehen ist.

17. Dentale Anordnung, die einen dentalen Pfeiler und eine Stumpfkappe nach Anspruch 1 aufweist.

18. Kit von Teilen, das zumindest eine Auswahl von Stumpfkappen nach Anspruch 1 aufweist.

19. Kit nach Anspruch 18, **dadurch gekennzeichnet, dass** der Kit auch einen oder mehrere dentale Pfeiler und/oder ein oder mehrere Zahnimplantate aufweist.

20. Kit nach Anspruch 18, **dadurch gekennzeichnet, dass** der Kit eine Vielzahl von Stumpfkappen und eine Vielzahl von Pfeilern aufweist.

21. Kit nach Anspruch 18, **dadurch gekennzeichnet, dass** der Kit eine Vielzahl von anatomischen Stumpfkappen (geeignete Rohlinge) und/oder Instrumente aufweist, die nach Bedarf enthalten sind.

22. Kit nach Anspruch 18, **dadurch gekennzeichnet, dass** der Kit eine Vielzahl von Stumpfkappen für jede Größe pro Implantatverbindungsgeometrie aufweist.

23. Verfahren zum Herstellen einer Zahnprothese, die die Verwendung eines Kits nach Anspruch 18 aufweist.

24. Verfahren nach Anspruch 23, **dadurch gekennzeichnet, dass** die Stumpfkappe und der Pfeiler individuell vorbereitet werden können, um die Halteform des Zahns zu repräsentieren, der rekonstruiert wird.

25. Verfahren nach Anspruch 23, **dadurch gekennzeichnet, dass** das Verfahren das Abformen von einer vorbereiteten Stumpfkappe und das Verbinden mit dem Metallpfeiler durch zum Beispiel Laserschweißen oder Kleben aufweist.

26. Verfahren nach Anspruch 23, **dadurch gekennzeichnet, dass** das Verfahren die Verwendung eines Klebstoffs aufweist, um ein Formstück mit einer Metallbasis zu verbinden, wobei das Formstück aus zum Beispiel einem Edelmetall oder einem unedlen Metall hergestellt ist.

27. Verfahren nach Anspruch 23, **dadurch gekennzeichnet, dass** die Stumpfkappe in einem Acryl oder anderen Ausbrennmaterialien hergestellt ist, die in einem Kit mit Stumpfkappen von verschiedenen geeigneten anatomischen Formen geliefert werden können.

28. Verfahren nach Anspruch 23, **dadurch gekennzeichnet, dass** die Stumpfkappe ein "Ausbrenn"-Kunststoff- oder -Wachsmaterial aufweist und die Prothetik unter Verwendung des Wachsausschmelzverfahrens hergestellt wird, das umfasst, einen Pfeiler in das Formstück zu gießen.

29. Verfahren nach Anspruch 23, **dadurch gekennzeichnet, dass** die Stumpfkappe und/oder der Pfeiler eine stabile Befestigungsverbindung aufweist, die eine ringförmige Vertiefung und eine ringförmige Lippe aufweist, die angepasst sind, um miteinander in Eingriff zu stehen, und wobei die ringförmige Lippe unter Verwendung einer Umlauffeile oder eines ähnlichen Werkzeugs oder durch Reibungsstrahlen entfernt oder im wesentlichen entfernt werden kann.

30. Verfahren nach Anspruch 23, **dadurch gekennzeichnet, dass** die Stumpfkappe und/oder der Pfeiler eine stabile Befestigungsverbindung aufweist, die ein Klebeband (Klebestreifen) aufweist, das durch Abziehen entfernt werden kann, oder eine Farbe, die unter Verwendung existierender Verfahren, die per se bekannt sind, entfernt werden kann.

31. Verfahren nach Anspruch 23, das den Schritt aufweist, ein einzelnes Formstück zu erzeugen, dass einen dentalen Pfeiler und eine Prothese aufweist, die anatomisch einem Zahn ähnlich ist.

32. Verfahren nach Anspruch 23, das die Verwendung eines Klebstoffs aufweist, um ein Formstück, das aus einem Edelmetall oder einem unedlen Metall hergestellt ist, mit einer Basis zu verbinden.

33. Verfahren nach Anspruch 32, bei dem die Basis eine Metallbasis oder eine Kunststoffbasis oder eine keramische Basis oder eine Keramik-Verbund-Basis ist.

## Revendications

1. Coiffe en plastique (11) pour prothèse dentaire, conçue pour une utilisation avec un pilier prothétique dentaire (9), la coiffe (11) n'étant pas prémontée sur un pilier mais étant apte à être choisie à partir d'une sélection de coiffes et apte à être attachée à un pilier, et la coiffe ressemblant anatomiquement à une dent et la coiffe étant apte à être montée à rotation sur un pilier avec 360 degrés de liberté.

2. Coiffe en plastique pour prothèse dentaire selon la revendication 1, **caractérisée par le fait que** la coiffe (11) ressemble à une prothèse de dent ou à une dent préalablement préparée.

3. Coiffe en plastique pour prothèse dentaire selon la revendication 1, **caractérisée par le fait que** la coiffe ressemble à une molaire ou une prémolaire ou une canine ou une incisive.

4. Coiffe en plastique pour prothèse dentaire selon la revendication 1, **caractérisée par le fait que** la coiffe comprend une matière « calcinable » plastique ou à base de cire.

5. Coiffe en plastique pour prothèse dentaire selon la revendication 4, **caractérisée par le fait que** la matière calcinable plastique ou à base de cire est le LEXAN 141R.

6. Pilier dentaire (9) qui est conçu pour venir en engagement non prémonté avec une coiffe en plastique (11) pour prothèse dentaire selon la revendication 1.

7. Pilier dentaire selon la revendication 6, **caractérisé par le fait que** le pilier (9) comporte des moyens (12') pour former un assemblage de retenue stable (13) avec la coiffe (11) lors de la préparation d'une restauration dentaire.

8. Pilier dentaire selon la revendication 7, **caractérisé par le fait que** la coiffe (11) comprend également des moyens correspondants (12") pour former un assemblage de retenue stable (13) avec le pilier (9).

9. Pilier dentaire selon la revendication 7, **caractérisé par le fait que** l'articulation de retenue stable comprend une cavité annulaire et une lèvre annulaire aptes à s'engager l'une avec l'autre.

10. Pilier dentaire selon la revendication 9, **caractérisé par le fait que** ledit pilier comporte ladite lèvre annulaire et une coiffe comporte ladite cavité annulaire.

11. Pilier dentaire selon la revendication 9, **caractérisé par le fait que** ledit pilier comporte ladite cavité annulaire et la coiffe comporte ladite lèvre annulaire.

12. Coiffe selon la revendication 1, **caractérisée par le fait qu'**elle comprend une marge transgingivale (15).

13. Coiffe selon la revendication 1, **caractérisée par le fait que** le pilier comporte des hauteurs anatomiques, des profils d'émergence et des angulations (23-25).

14. Pilier dentaire selon la revendication 6, **caractérisé par le fait que** le matériau du pilier est un métal, de préférence Au ou Ti ou un alliage CoCr.

15. Pilier dentaire selon la revendication 6, **caractérisé par le fait que** le matériau du pilier est une matière plastique.

16. Pilier dentaire selon la revendication 14, **caractérisé par le fait que** la liaison avec la coiffe prend la forme d'un ou plusieurs parmi un filetage, un encliquetage ou un frottement.

17. Dispositif dentaire comprenant un pilier dentaire et une coiffe selon la revendication 1.

18. Trousse de pièces comprenant au moins une sélection de coiffes selon la revendication 1.

19. Trousse selon la revendication 18, **caractérisé par le fait que** la trousse comprend également un ou plusieurs piliers dentaires et/ou un ou plusieurs implants dentaires.

20. Trousse selon la revendication 18, **caractérisé par le fait que** la trousse comprend une pluralité de coiffes et une pluralité de piliers.

21. Trousse selon la revendication 18, **caractérisé par le fait que** la trousse comprend une pluralité de coiffes anatomiques (ébauches appropriées) et/ou d'instruments sur ergot.

22. Trousse selon la revendication 18, **caractérisé par le fait que** la trousse comprend une pluralité de coiffes pour chaque taille par géométrie de liaison d'implant.

23. Procédé de préparation d'une prothèse dentaire qui comprend l'utilisation d'une trousse selon la revendication 18.

24. Procédé selon la revendication 23, **caractérisé par le fait que** la coiffe et le pilier peuvent être préparés individuellement pour représenter la forme de retenue de la dent qui est reconstruite.

25. Procédé selon la revendication 23, **caractérisé par le fait que** le procédé comprend le coulage à partir d'une coiffe préparée et l'assemblage au pilier métallique, par exemple, par soudage laser ou collage.

26. Procédé selon la revendication 23, **caractérisé par le fait que** le procédé comprend l'utilisation d'une colle pour assembler un modèle à une base métallique, le modèle étant fait, par exemple, 1 d'un métal précieux ou non précieux.

27. Procédé selon la revendication 23, **caractérisé par le fait que** la coiffe est réalisée en une matière acrylique ou autres matières calcinables, qui peuvent être fournies dans une trousse avec des coiffes de plusieurs formes anatomiques appropriées.

28. Procédé selon la revendication 23, **caractérisé par le fait que** la coiffe comprend une matière « calcinable » plastique ou à base de cire et la prothèse telle que préparée à l'aide de la technique à la cire perdue comprenant un pilier qui est coulé dans le modèle.

29. Procédé selon la revendication 23, **caractérisé par le fait que** la coiffe et/ou le pilier comprend un assemblage de retenue stable comprenant une cavité annulaire et une lèvre annulaire aptes à s'engager l'une avec l'autre et la lèvre annulaire pouvant être retirée ou sensiblement retirée à l'aide d'une fraise ou d'un outil similaire ou par nettoyage par friction.

30. Procédé selon la revendication 23, **caractérisé par le fait que** la coiffe et/ou le pilier comprend un assemblage de retenue stable comprenant une bande adhésive (scotch) qui peut être retirée par pelage, ou une peinture qui peut être retirée à l'aide de procédés existants connus en soi.

31. Procédé selon la revendication 23, comprenant l'étape de production d'un modèle unique comprenant un pilier dentaire et une prothèse qui ressemble anatomiquement à une dent.

32. Procédé selon la revendication 23, qui comprend l'utilisation d'une colle pour assembler un modèle fait d'un métal précieux ou non précieux à une base.

33. Procédé selon la revendication 32, dans lequel la base est une base métallique ou une base en plastique, ou une base céramique ou composite céramique.
